Europäisches Patentamt

European Patent Office

Office européen des brevets

(11) Veröffentlichungsnummer: **0 226 858**
**A1**

(12) # EUROPÄISCHE PATENTANMELDUNG

(21) Anmeldenummer: 86116410.1

(51) Int. Cl.⁴: **F24D 19/10** , F04D 15/00

(22) Anmeldetag: 26.11.86

(30) Priorität: 30.11.85 DE 3542370

(43) Veröffentlichungstag der Anmeldung:
01.07.87 Patentblatt 87/27

(84) Benannte Vertragsstaaten:
AT BE CH DE ES FR GB GR IT LI NL SE

(71) Anmelder: WILO-Werk GmbH & Co. Pumpen-
und Apparatebau
Nortkirchenstrasse 100
D-4600 Dortmund 30(DE)

(72) Erfinder: Jury, Reinhard, Dipl.-Ing.
Burgstrasse 15
D-5790 Brilon-Alme(DE)
Erfinder: Hübner, Jürgen, Dipl.-Ing.
Aplerbecker-Mark-Strasse 78
D-4600 Dortmund 41(DE)

(74) Vertreter: Patentanwaltsbüro Cohausz &
Florack
Postfach 14 01 47
D-4000 Düsseldorf 1(DE)

(54) Verfahren zum Regeln der Förderhöhe einer Pumpe.

(57) Die Erfindung betrifft ein Verfahren zum Regeln
der Förderhöhe einer Pumpe durch Verändern der
Stromzufuhr zum Elektromotor entsprechend an der
Pumpe gemessenen Werten. Hierbei werden Drehzahl und Stromstärke gemessen und aus diesen
beiden Werten ein Wert gebildet, der ein Maß für die
Ist-Förderhöhe darstellt und mit einem der Soll-
Förderhöhe entsprechenden Wert verglichen wird.
Die Stromzufuhr wird so verändert, daß die Differenz
der Werte von Soll-und Ist-Förderhöhe zu Null wird.

EP 0 226 858 A1

## Verfahren zun. Regeln der Förderhöhe einer Pumpe

Die Erfindung betrifft ein Verfahren zum Regeln der Förderhöhe einer Pumpe durch Verändern der Stromzufuhr zum Elektromotor entsprechend an der Pumpe gemessenen Werten.

Es ist bekannt, bei durch einen Elektromotor angetriebenen Pumpen, insbesondere in einem Heizungskreislauf angeordneten Pumpen die Druckdifferenz über die Pumpen zu messen und entsprechend die Motorspannung zu regeln. Das Anordnen zusätzlicher Druckmeßgeräte an den Leitungen des zu fördernden Mediums ist aufwendig und darüber hinaus eine zusätzliche Fehlerquelle.

Aufgabe der Erfindung ist es ein Verfahren der eingangs ganannten Art zum Regeln der Förderhöhe einer Pumpe zu schaffen, durch das auf einfache Weise die Pumpe regelbar ist ohne den Druck des geförderten Mediums zu messen.

Diese Aufgabe wird erfindungsgemäß dadurch gelöst, daß Drehzahl und Stromstärke gemessen und aus diesen beiden Werten ein Wert gebildet wird, der ein Maß für die Ist-Förderhöhe darstellt und mit einem der Soll-Förderhöhe entsprechend Wert verglichen wird, wobei die Stromzufuhr so verändert wird, daß die Differenz der Werte von Soll-und Ist-Förderhöhe zu Null wird.

Drehzahl und Stromstärke lassen sich direkt am Elektromotor messen, so daß keine zusätzlichen Verbindungen zu weiterentfernt liegenden Meßstellen erforderlich sind. Alle Meßorte und die Regel-als auch Steuereinrichtungen können direkt in und/oder an der Pumpe vorgesehen sein, so daß sie mit der Pumpe eine Einheit bilden können, die keine zusätzliche Montage erfordert.

Besonders vorteilhaft ist es, wenn der Drehzahlmeßwert entsprechend dem Stromstärkenmeßwert verändert und dieser neu gebildete Wert als Eingangsgröße und damit als Maß für die Ist-Förderhöhe der Regelung verwendet wird. Ferner wird vorteilhafter Weise vorgeschlagen, daß Drehzahl-und Stromstärkenmeßwert addiert oder voneinander subtrahiert werden.

Vorzugsweise wird vorgeschlagen, daß der aus Drehzahl und Stromstärke gebildete Wert durch einen konstanten oder vorgegebenen Wert verändert wird. Durch eine Veränderung des von außen zusätzlich in den Regler eingegebenen Soll-Wertes ist es möglich, die Förderhöhe wunschgemäß zu verändern.

Besonders vorteilhaft ist es, wenn durch den Wert der Förderhöhe der Stromstärkenmeßwert veränderbar ist. Hierbei kann bei kleinen Förderhöhen der Stromstärkenmeßwert vergrößert und bei großen Förderhöhen der Stromstärkenmeßwert verkleinert eingehen.

Eine besonders einfache Veränderung der Motordrehzahl wird dadurch geschaffen, wenn die Motorspannung geregelt wird. Besonders vorteilhaft ist es, wenn Drehzahl und Stromstärke innerhalb oder an der Pumpe oder an dem Motor gemessen werden.

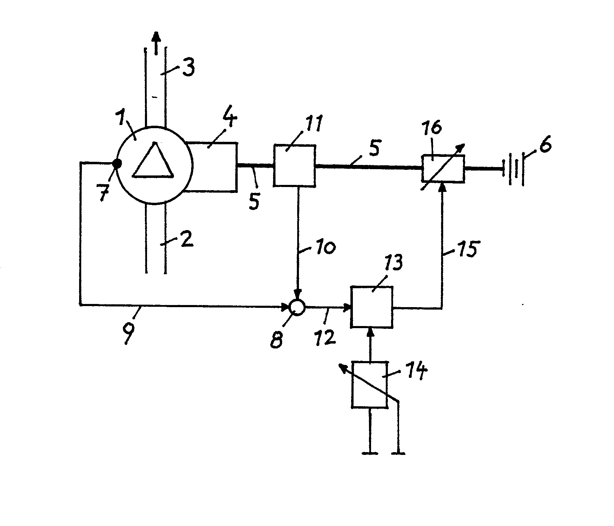

Ein Ausführungsbeispiel der Erfindung ist in der Zeichnung dargestellt und wird im folgenden näher beschrieben.

Eine Flüssigkeitspumpe 1, insbesondere für den Warmwasser-Kreislauf einer Heizungsanlage weist einen Einlaß 2 und einen Auslaß 3 auf. Die Pumpe 1 wird durch einen an ihr befestigten Elektromotor 4 angetrieben, dem über eine elektrische Leitung 5 von einer Quelle 6 Strom zugeführt wird. Diese Stromquelle 6 ist üblicherweise das öffentliche Stromnetz.

An einem Meßort 7 wird an der Pumpe 1 oder dem Elektromotor 4 die Drehzahl des Läufers - (Rotors) gemessen. Dies kann insbesondere bei einer Spaltrohrpumpe durch im Laufrad angeordnete Permanentmagnete geschehen, die an ortsfesten Meßspulen vorbeilaufen, wie dies in der nicht vorveröffentlichten deutschen Patentanmeldung P 35 38 225.2 beschrieben ist. Dieser hierdurch erhaltene Drehzahlmeßwert wird einer Vorrichtung 8 über eine elektrische Leitung 9 geliefert. In diese Vorrichtung 8 geht ferner ein Strommeßwert ein, der über eine elektrische Leitung 10 von einer Meßvorrichtung 11 erhalten wird. Diese Meßvorrichtung 11 liegt in oder an der elektrischen Leitung 5, die die Stromversorgung für den Elektromotor 4 bildet. Dieser Strommeßwert stellt die Stromstärke dar, so daß dieser Wert angibt, wieviel Strom der Elektromotor 4 aufnimmt.

Die Vorrichtung 8 bildet aus dem Drehzahlmeßwert und dem Strommeßwert einen einzigen Wert, der durch eine elektrische Leitung 12 einem Regler 13 zugeführt wird. Dieser dem Regler 13 zugeführte Wert kann aus dem Drehzahlmeßwert und dem Strommeßwert dadurch gebildet werden, daß Drehzahl-und Stromstärkenmeßwert addiert oder voneinander subtrahiert werden. Es kann hier aber auch zu anderen Arten der Beeinflussung eines Wertes durch den anderen geschehen. Insbesondere kann das Verhältnis beider Werte durch die Division oder Multiplikation gebildet werden. Durch den Wert der Förderhöhe ist der Stromstärkenmeßwert veränderbar. Insbesondere geht bei kleinen Förderhöhen der Stromstärkenmeßwert vergrößert und bei großen Förderhöhen der Stromstärkenmeßwert verkleinert ein. Bei kleinen Förderhöhen soll also der Stromstärkenmeßwert stärker eingehen als bei großen Förderhöhen.

In den Regler 13 geht ferner ein Sollwert ein, der durch eine Vorrichtung 14, insbesondere einem Potentiometer einstellbar ist. Der Regler 13 vergleicht den Sollwert mit dem durch die Leitung 12 eingehenden Wert als Istwert und steuert über eine elektrische Leitung 15 einen Potentiometer 16, der sich in der Leitung 5 zwischen der Meßvorrichtung 11 und der Stromquelle 6 befindet. Hierdurch wird die Spannung am Elektromotor 4 verändert. Statt eines Potentiometers 16 kann aber auch eine andere Regelvorrichtung in der Leitung 5 angeordnet sein um in einer anderen Weise Einfluß auf die Stromzufuhr zum Elektromotor zu nehmen um die Drehzahl des Elektromotors zu ändern. So können Stromstärke, Frequenz oder Stromdauer regelbar sein.

Die Vorrichtungen 7, 8, 11, 13, 14 und 16 können innerhalb der Gehäuse von Motor und/oder Pumpe angeordnet oder außen an einem der Gehäuse befestigt sein, so daß die gesamte Anlage von einer kompakten einstückigen Vorrichtung - (Pumpe) gebildet sein kann. Die Anlage bzw. das Verfahren arbeitet wie folgt:

Steigt im Rohrleitungssystem der Widerstand an, so erhöht sich die Drehzahl der Pumpe und die Stromaufnahme des Elektromotors sinkt. Die hierdurch erhaltenen Drehzahl-und Strommeßwerte werden in der Vorrichtung 8 zu einem einzigen Wert verarbeitet, der dem Regler 13 eingegeben wird und der Regler erzeugt eine Stellgröße, die über die Leitung 15 der Vorrichtung 16 zugeführt wird. Hierdurch wird die Stromzufuhr zum Elektromotor so verändert, daß die Drehzahl des Elektromotors verringert wird. Ein ständiges weiteres Absinken der Drehzahl des Elektromotors wird dadurch verhindert, daß der durch die Leitung 12 in den Regler 13 eingehende Wert mit dem Sollwert verglichen wird und damit entsprechend der Einstellung des Sollwertes nur der gewünschte Differenzdruck über die Pumpe erreicht bzw. konstant gehalten wird.

### Ansprüche

1. Verfahren zum Regeln der Förderhöhe einer Pumpe durch Verändern der Stromzufuhr zum Elektromotor entsprechend an der Pumpe gemessenen Werten, **dadurch gekennzeichnet,** daß Drehzahl und Stromstärke gemessen und aus diesen beiden Werten ein Wert gebildet wird, der ein Maß für die Ist-Förderhöhe darstellt und mit einem der Soll-Förderhöhe entsprechenden Wert verglichen wird, wobei die Stromzufuhr so verändert wird, daß die Differenz der Werte von Soll-und Ist-Förderhöhe zu Null wird.

2. Verfahren nach Anspruch 1, **dadurch gekennzeichnet,** daß der Drehzahlmeßwert entsprechend dem Stromstärkenmeßwert verändert und dieser neu gebildete Wert als Eingangsgröße und damit als Maß für die Ist-Förderhöhe der Regelung verwendet wird.

3. Verfahren nach Anspruch 1 oder 2, **dadurch gekennzeichnet,** daß Drehzahl-und Stromstärkenmeßwert addiert oder voneinander subtrahiert werden.

4. Verfahren nach einem der vorherigen Ansprüche, **dadurch gekennzeichnet,** daß der aus Drehzahl und/oder Stromstärke gebildete Wert durch einen konstanten oder vorgegebenen Wert verändert wird.

5. Verfahren nach einem der vorherigen Ansprüche, **dadurch gekennzeichnet,** daß durch den Wert der Förderhöhe der Stromstärkenmeßwert veränderbar ist.

6. Verfahren nach Anspruch 5, **dadurch gekennzeichnet,** daß bei kleinen Förderhöhen der Stromstärkenmeßwert vergrößert und bei großen Förderhöhen der Stromstärkenmeßwert verkleinert eingeht.

7. Verfahren nach einem der vorherigen Ansprüche, **dadurch gekennzeichnet,** daß die Motorspannung geregelt wird.

8. Verfahren nach einem der vorherigen Ansprüche, **dadurch gekennzeichnet,** daß Drehzahl und Stromstärke innerhalb oder an der Pumpe oder an dem Motor gemessen werden.

0 226 858

45 289

**Europäisches Patentamt**

**EUROPÄISCHER TEILRECHERCHENBERICHT,**
der nach Regel 45 des Europäischen Patentübereinkommens für das weitere Verfahren als
europäiscner Recherchenbericht gilt

Nummer der Anmeldung

EP 86 11 6410.1

## EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int. Cl. ³) |
|---|---|---|---|
| Y | EP - A - 0 150 068 (RHEINHÜTTE) <br><br> * Zusammenfassung; Seite 1, Zeile 8 - Seite 4, Zeile 8; Seite 8, Zeile 9 - Seite 9, Zeile 21; Seite 10, Zeile 11 - Seite 15, Zeile 12; Seite 15, Zeile 28 - Seite 16, Zeile 15, Figuren 1, 3, 5; Ansprüche 1, 2, 8, 14 * <br><br> -- | 1,3 | F 24 D 19/10 <br> F 04 D 15/00 |
| Y | DE - A - 2 946 049 (HOECHST) <br><br> * ganzes Dokument, insbesondere: Seite 2, Zeile 32 - Seite 3, Zeile 2; Seite 4, Zeilen 7-9 * <br><br> -- | 1,3 | |

../..

RECHERCHIERTE
SACHGEBIETE (Int. Cl. ³)

F 24 D 19/00
F 04 D 15/00

## UNVOLLSTÄNDIGE RECHERCHE

Nach Auffassung der Recherchenabteilung entspricht die vorliegende europäische Patentanmeldung den Vorschriften des Europäischen Patentubereinkommens so wenig, daß es nicht möglich
ist auf der Grundlage einiger Patentansprüche sinnvolle Ermittlungen über den Stand der Technik
durchzufuhren.

Vollstandig recherchierte Patentansprüche: 1, 3, 7, 8

Unvollstandig recherchierte Patentanspruche: 2, 4 - 6

Nicht recherchierte Patentanspruche:

Grund fur die Beschrankung der Recherche:

Anspruch 2: Kennlinie $n' = f(I)$; $H = f(n')$ ?

Anspruch 4: Wieso werden entweder nur n oder nur I, oder beide verwendet, um eine Konstante (welche ?) damit zu verknüpfen, oder um eine Funktions- gleichung darauf anzuwenden (welche ?) ?

Anspruch 5: Ist H gemessen oder H soll gemeint ?

Anspruch 6: Wie bei Anspruch 5; wie sieht die Kennlinie aus ?

| Recherchenort | Abschlußdatum der Recherche. | Prufer |
|---|---|---|
| Berlin | 20-02-987 | BEITNER |

Europäisches
Patentamt
**EUROPÄISCHER TEILRECHERCHENBERICHT**

Nummer der Anmeldung

EP 86 11 6410.1

- Seite 2 -

| | **EINSCHLÄGIGE DOKUMENTE** | | KLASSIFIKATION DER ANMELDUNG (Int. Cl. ) |
|---|---|---|---|
| Kategorie | Kennzeichnung des Dokuments mit Angabe, soweit erforderlich der maßgeblichen Teile | betrifft Anspruch | |
| Y | EP - A - 0 091 869 (SOCIETE ELECTRO-HYDRAULIQUE)<br><br>* Seite 1, Zeile 5 - Seite 2, Zeile 16; Seite 2, Zeile 30 - Seite 3, Zeile 11; Seite 3, Zeilen 22-33; Seite 4, Zeile 10 - Seite 5, Zeile 2; Seite 5, Zeile 23 - Seite 6, Zeile 31; Figuren 1-8; Ansprüche 1, 4, 6 * | 1,3 | |
| A | | 7 | |
| | -- | | RECHERCHIERTE SACHGEBIETE (Int. Cl.³) |
| A | TECHNISCHE RUNDSCHAU, Band 76, Nr. 24, Juni 1984, Seite 29, Bern, CH; M. PORNITZ : "Mikroprozessoren senken Stromverbrauch von Zirkulationspumpen" * ganzer Artikel * | 1 | |
| | ---- | | |